# EUROPEAN PATENT APPLICATION

(11) **EP 4 789 593 A1**
(43) Date of publication of application: **12.08.2026**
(21) Application number: 26156632.7
(22) Date of filing: 05.02.2026
(51) Int. Cl.: A47J 39/00, F25D 31/00, A47F 3/04, F25D 25/02

(54) **A TEMPERATURE-CONTROLLED FOODSERVICE UNIT**

(30) Priority: 07.02.2025 US 202519048382
(71) Applicant: Thermodyne Food Service Products, Inc., Fort Wayne Indiana 46803 (US)
(72) Inventor: Schenkel, David C., Fort Wayne, 46835 (US); Blasi, Mark, Fort Wayne, 46818 (US); Tippmann, Tim P., New Haven, 46774 (US)
(74) Representative: Fuchs Patentanwälte Partnerschaft mbB

(57) **Abstract**

A temperature-controlled foodservice unit includes: a body including a frame and defining a chamber; and temperature-controlled systems operatively coupled with the frame and configured for transferring heat with respect to a food product positioned within the chamber, the temperature-controlled systems including: a temperature-controlled shelf system including at least one shelf and at least one fluid passageway, the at least one shelf being positioned within the chamber, the at least one fluid passageway being associated with the at least one shelf and configured for carrying a fluid therein so as to transfer heat by thermal conduction and thermal radiation with respect to the food product on the shelf; and a temperature-controlled air system configured for moving air through the chamber so as to transfer heat by thermal convection with respect to the food product positioned on the at least one shelf and for supplying air to the chamber from opposing directions.

## Description

### BACKGROUND OF THE INVENTION

### Cross Reference To Related Applications

This is a continuation-in-part of U.S. patent application serial no. 18/647,700, entitled "A TEMPERATURE-CONTROLLED FOODSERVICE UNIT", filed April 26, 2024, which is incorporated herein by reference.

### 1. Field of the Invention

The present invention relates to foodservice units, and, more particularly, to foodservice units with temperature control.

### 2. Description of the Related Art

A temperature-controlled foodservice unit can be formed as cabinet on wheels. The cabinet can include a plurality of shelves which are positioned within an interior chamber of the cabinet. Food product held by these shelves can be chilled or warmed by way of fluid shelf technology of the temperature-controlled foodservice unit, wherein refrigerated or warmed fluid is pumped through the shelves. Though such a unit is effective, an enhanced heat transfer with respect to the food product may be desirable.

Also known are foodservice units that employ only convection to cook food. An example of such a unit is an air fryer.

What is needed in the art is to improve the heat transfer of a temperature-controlled foodservice unit with respect to food product housed therein.

### SUMMARY OF THE INVENTION

The present invention provides a temperature-controlled foodservice unit that includes a temperature-controlled shelf system which employs thermal conduction and thermal radiation to transfer heat with respect to a food product within the unit, as well as a temperature-controlled air system which employs thermal convection to transfer heat with respect to the food product within the unit.

The invention in one form is directed to a temperature-controlled foodservice unit including: a body including a frame and defining a chamber; and a plurality of temperature-controlled systems operatively coupled with the frame and configured for transferring heat with respect to a food product positioned within the chamber, the plurality of temperature-controlled systems including: a temperature-controlled shelf system including at least one shelf and at least one fluid passageway, the at least one shelf being positioned within the chamber, the at least one fluid passageway being associated with the at least one shelf and configured for carrying a fluid therein so as to transfer heat by thermal conduction and thermal radiation with respect to the food product positioned on the at least one shelf; and a temperature-controlled air system configured for moving air through the chamber so as to transfer heat by thermal convection with respect to the food product positioned on the at least one shelf and for supplying air to the chamber from opposing directions.
The invention in another form is directed to a method of using a temperature-controlled foodservice unit, the method including the steps of: providing that the temperature-controlled foodservice unit includes a body and a plurality of temperature-controlled systems, the body including a frame and defining a chamber, the plurality of temperature-controlled systems being operatively coupled with the frame and configured for transferring heat with respect to a food product positioned within the chamber, the plurality of temperature-controlled systems including a temperature-controlled shelf system and a temperature-controlled air system, the temperature-controlled shelf system including at least one shelf and at least one fluid passageway, the at least one shelf being positioned within the chamber, the at least one fluid passageway being associated with the at least one shelf; carrying, by the at least one fluid passageway, a fluid in the at least one fluid passageway so as to transfer heat by thermal conduction and thermal radiation with respect to the food product positioned on the at least one shelf; moving, by the temperature-controlled air system, air through the chamber so as to transfer heat by thermal convection with respect to the food product positioned on the at least one shelf; and supplying, by the temperature-controlled air system, air to the chamber from opposing directions.

An advantage of the present invention is that it uses a temperature-controlled air system (heated or cooled) in conjunction with a temperature-controlled shelf system (heated or cooled) to maximize the heat transfer in or out of food product placed on the shelves. This can be used both to warm or to cool food products or to hold the food products at a desirable temperature. Heat transfer is maximized by using each of the following aspects of heat transfer: thermal conduction; thermal convection; and thermal radiation. The present invention advantageously uses shelf conduction and air convection to control food product temperature very accurately and to accelerate thaw times and to decrease warming times. Indeed, thawing times of food can be reduced substantially. Thus, for example, in a warming context (when the food product is being thawed, for example), using two thawing mediums (shelf fluid and air) thaws the food product faster (i.e., significantly faster) as compared to using only one thawing medium (shelf fluid or air, not both) to thaw the food product (that is, this benefit of faster thawing times (more broadly, faster heat transfer times) is from both the shelf fluid temperature and the air temperature working together, as opposed to one or the other being used individually and thus without the other). Conversely, using only one thawing medium (shelf fluid or air) would take significantly more time (i.e., hours) to thaw the food product than using both thawing mediums. Additionally, using the two thawing mediums enables the temperature control of each food product item to be very close for that particular food product during the thawing cycle of the food product item, as compared to one part of the frozen food product thawing much faster than the other with the use of only air, for instance, as a thawing medium (that is, using only convection). Further, because of using two thawing mediums, the particular food product item thaws evenly because of the close temperature control with respect to that item, and the close temperature control accomplished within the chamber by way of the present invention enables the various food product items within the chamber to thaw evenly relative to one another.

Another advantage of the present invention is that it provides significant attention to airflow, air velocity, and temperature control, so as to effectuate an enhanced heat transfer with respect to the food product within the foodservice unit.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
FIG. 1 is a schematic perspective view of a temperature-controlled foodservice unit, which includes a body, a plurality of temperature-controlled systems (including a temperature-controlled shelf system and a temperature-controlled air system), and a control system, according to an exemplary embodiment of the present invention;
FIG. 2 is a schematic front view of the temperature-controlled foodservice unit of FIG. 1, with portions broken away, according to an exemplary embodiment of the present invention;
FIG. 3 is a perspective view of the temperature-controlled foodservice unit of FIG. 1, with portions broken away, according to an exemplary embodiment of the present invention;
FIG. 4 is a schematic diagram of fluid circuits of the temperature-controlled foodservice unit of FIG. 1, according to an exemplary embodiment of the present invention;
FIG. 5 is a schematic diagram of the control system of FIG. 1, according to an exemplary embodiment of the present invention;
FIG. 6 is a flow diagram showing a method of using the temperature-controlled foodservice unit, in accordance with an exemplary embodiment of the present invention;
FIG. 7 is a schematic front view of another embodiment of the temperature-controlled foodservice unit, with portions broken away, according to an exemplary embodiment of the present invention;
FIG. 8 is a schematic top view of the temperature-controlled foodservice unit of FIG. 7, with portions broken away, according to an exemplary embodiment of the present invention;
FIG. 9 is a schematic diagram of fluid circuits of the temperature-controlled foodservice unit of FIG. 7, according to an exemplary embodiment of the present invention;
FIG. 10 is a schematic diagram of the control system of FIG. 7, according to an exemplary embodiment of the present invention; and
FIG. 11 is a flow diagram showing a method of using the temperature-controlled foodservice unit, in accordance with an exemplary embodiment of the present invention.

Corresponding reference characters indicate corresponding parts throughout the several views. The exemplifications set out herein illustrate embodiments of the invention, and such exemplifications are not to be construed as limiting the scope of the invention in any manner.

### DETAILED DESCRIPTION OF THE INVENTION

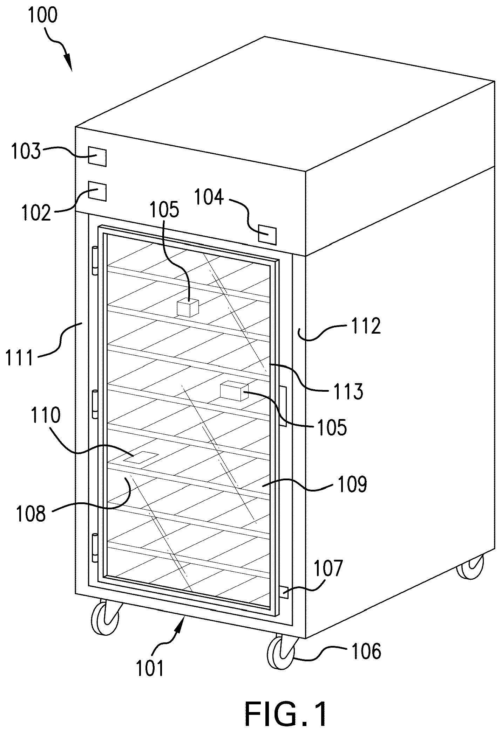

Referring now to the drawings, and more particularly to FIG. 1, there is shown a schematic perspective view of a temperature-controlled foodservice unit 100, according to an exemplary embodiment of the present invention (unit 100 according to each of the embodiments of the present invention described herein and/or shown in the drawings includes a variety of interconnected parts described herein). Unit 100 generally includes a body 101, a plurality of temperature-controlled systems 102, 103, and a control system 104 (control system 104 being shown schematically in FIG. 1 and discussed further below). Unit 100 is configured for servicing a plurality of food items 105 (which can also be referred to as food or food product), which includes (i) warming and cooking items 105, (ii) cooling items 105, and/or (iii) holding items 105 at a constant temperature. As shown in FIG. 1, according to an exemplary embodiment of the present invention, body 101 can be formed as a cabinet 101, which is assumed to be the case herein. Cabinet 101 includes a frame 107 (shown schematically in FIG. 1) and defines a chamber 108 inside cabinet 101, chamber 108 being where food items 105 are warmed, cooked, cooled, and/or held. As shown in FIG. 1, cabinet 101 can include a plurality of wheels 106, configured for enabling cabinet 101 to be wheeled across a floor. Cabinet 101 further includes a hinged door 113 providing a user accessibility to chamber 108 and items 105 therein.

Temperature-controlled systems 102, 103 (shown schematically in FIG. 1) are operatively coupled with frame 107 and are configured for transferring heat with respect to food product 105 positioned within chamber 108 (that is, heat is transferred to (warming) or away from (cooling) food product 105). Temperature-controlled systems 102, 103 include a temperature-controlled shelf system 102 and a temperature-controlled air system 103. Each of systems 102, 103 are configured for heating or cooling the respective medium of the respective system 102, 103 to a respective desired or target setpoint temperature. The desired setpoint temperatures of systems 102, 103 can be different and independent of each other.

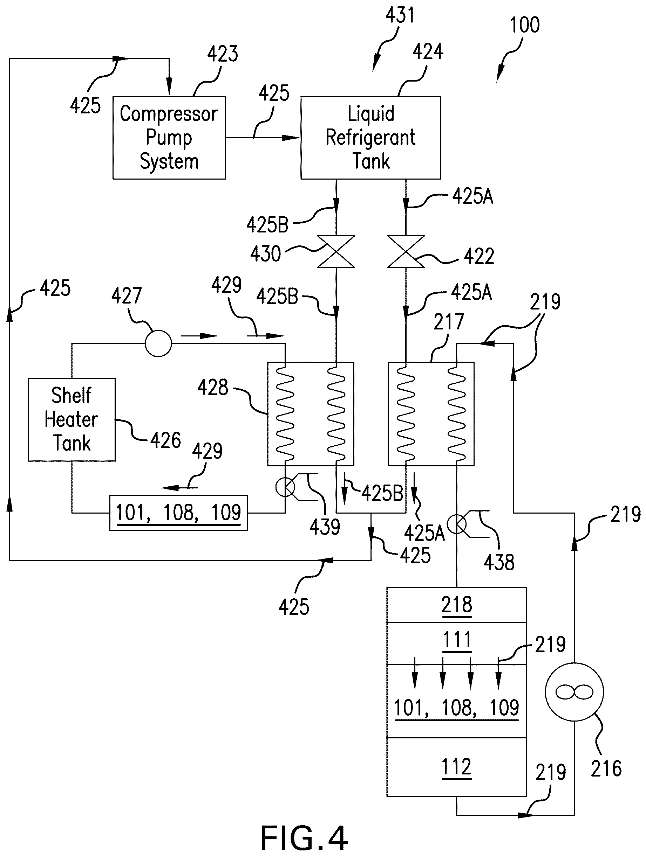

Temperature-controlled shelf system 102 forms a fluid circulation system and includes at least one shelf 109 (a plurality of shelves 109 being shown in FIG. 1) and at least one fluid passageway 110 (shown schematically in FIG. 1)(wherein, according to an exemplary embodiment of the present invention, the fluid is a liquid, which is assumed to be the case herein). Shelves 109 are positioned within chamber 108. The fluid which flows in fluid passageways 110 can be referred to herein as shelf fluid. Fluid passageways 110 are associated with (optionally, connected to or formed inside of) a respective shelf 109 and are configured for carrying the shelf fluid therein so as to transfer heat by thermal conduction and thermal radiation with respect to food product 105 positioned on shelves 109 (that is, heat is transferred to (warming) or away from (cooling) food product 105). Each shelf 109 can thus be referred to as a fluid shelf 109. Further, by way of temperature-controlled shelf system 102, the fluid in shelves 109 can be either heated or cooled to a desired setpoint with at least one fluid-heating device 426 to warm the shelf fluid and with a fluid-cooling device 428 that chills the shelf fluid, respectively (FIG. 4). Thus, shelves 109 are configured to transfer heat to or away from food product 105 by way of thermal conduction (depending upon whether warming or cooling of food product 105 is desired), because of the direct contact between shelves 109 and food product 105. Further, shelves 109 also radiate heat to food product 105 (above and below shelves 109) if shelves 109 are warmer than product 105 and the warming of food product 105 is desired, and shelves 109 absorb radiant heat if food product 105 is warmer than shelves 109 and the cooling of food product 105 is desired.

Temperature-controlled air system 103 forms an air circulation system and is configured for moving air through chamber 108 so as to transfer heat by thermal convection with respect to food product 105 positioned on shelves 109 (that is, heat is transferred to (warming) or away from (cooling) food product 105). Temperature-controlled air system 103 includes an air supply plenum 111 and an air return plenum 112. Air supply plenum 111 is configured for receiving air from other aspects of air system 103 and for supplying air to chamber 108. Air return plenum 112 is configured for receiving air from chamber 108 and for forwarding this air to other aspects of air system 103.

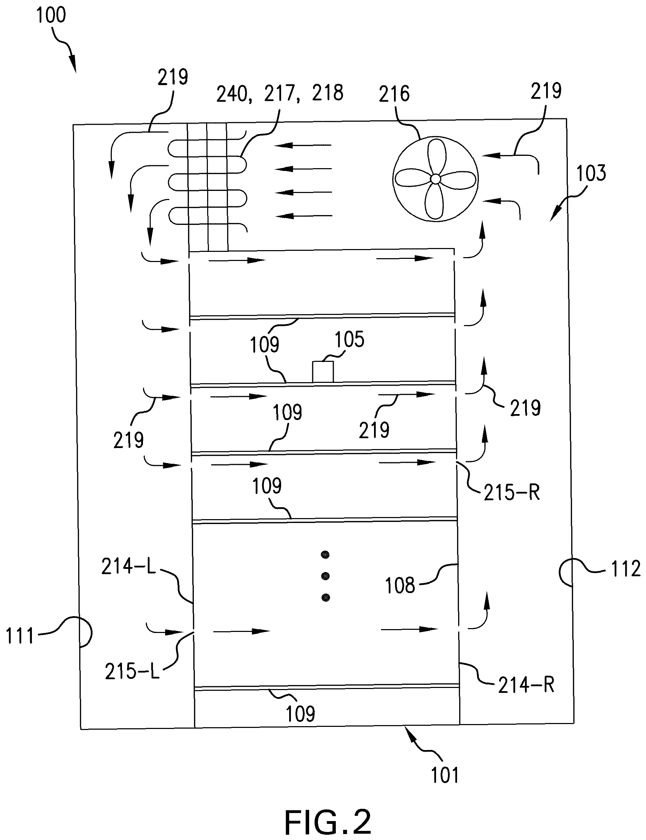

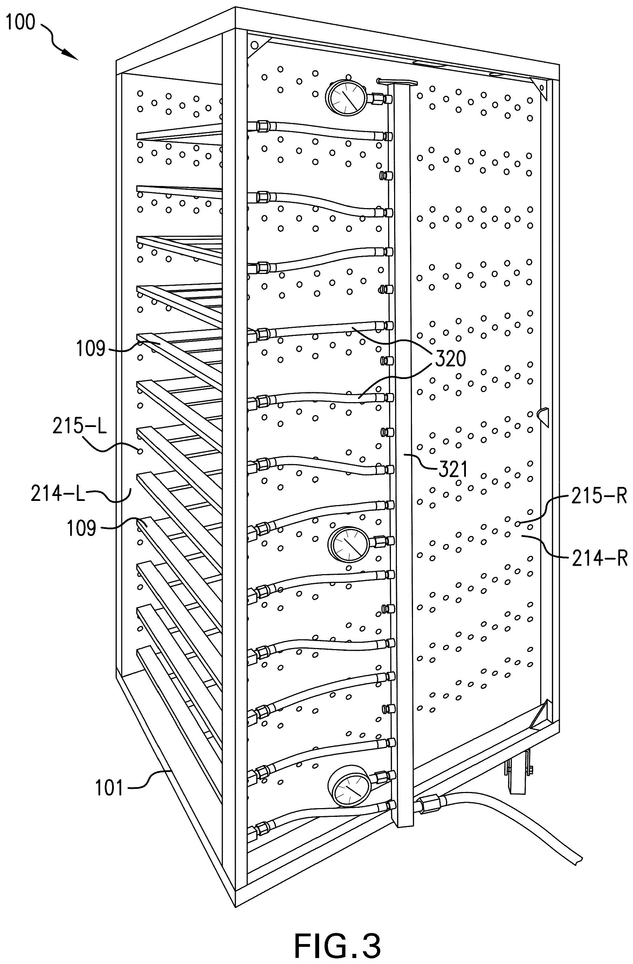

Referring now to FIG. 2, there is shown schematically a front view of unit 100, with portions broken away. FIG. 2 shows schematically temperature-controlled air system 103 but omits temperature-controlled shelf system 102. Unit 100 further includes side walls 214-L, 214-R opposing one another. Side walls 214-L, 214-R are parts of both cabinet 101 and air system 103; stated another way, each of cabinet 101 and air system 103 includes side walls 214-L, 214-R. More specifically, one surface of side wall 214-L faces chamber 108, and the other surface of side wall 214-L faces air supply plenum 111. Similarly, one surface of side wall 214-R faces chamber 108, and the other surface of side wall 214-R faces air return plenum 112 (see also FIG. 3). Each of side walls 214-L, 214-R includes a respective plurality of holes 215-L, 215-R. Holes 215-L are configured for allowing air to flow from an interior of air supply plenum 111 to chamber 108, and holes 215-R are configured for allowing air to flow from chamber 108 to air return plenum 112. Holes 215-L, in cooperation with holes 215-R, are configured for directing the airflow over and around food product 105 in chamber 108.
Air system 103 provides an airflow system around body 101. According to an exemplary embodiment of the present invention, air system 103 further includes an air-moving device 216 and an air-treatment apparatus 240. Air-moving device 216 is configured for moving the air within temperature-controlled air system 103 and thereby for increasing or decreasing a velocity of the air or holding the velocity of the air constant. Air-moving device 216 can be, for example and not limitation, a fan or a (powerful) forced air blower, configured for recirculating the air. Air-treatment apparatus 240 is a heat exchanger, such as a radiator-type heat exchanger, that uses heated or cooled fluid to affect the temperature of the air flowing thereby (as indicated by airflow arrows 219). Air-treatment apparatus 240 is thus configured for (i) cooling the air before the air enters air supply plenum 111 and (ii) heating the air before the air enters air supply plenum 111. Air-treatment apparatus 240 can include an actuator (or, alternatively, such an actuator can be associated with apparatus 240) configured for metering and thus allowing passage of the heated or cooled fluid to other parts of apparatus 240, in order to control air temperature flowing within air system 103.

According to an alternative embodiment of the present invention (but still shown in FIG. 2), air system 103 includes an air-cooling device 217 and an air-heating device 218, rather than air-treatment apparatus 240 (which combines the air cooling and heating functions). In this embodiment, then, the same structure in FIG. 2 that is labeled as 240 is also labeled as 217, 218, but it is understood that this structure is either apparatus 240 or, alternatively, two separate devices 217, 218 (though devices 217, 218 can form parts of a unit (i.e., a chiller evaporator and heater unit) or be two separate parts not parts of a single unit). Air-cooling device 217 is configured for cooling the air before the air enters air supply plenum 111. Air-cooling device 217 can be, for example and not limitation, a chiller evaporator (which can also be described as an evaporator-type heat exchanger), a radiator, or an equivalent device that cools the air. Air-heating device 218 is configured for heating the air before the air enters air supply plenum 111. Air-heating device 218 can be any suitable heating device for heating air.

FIG. 2 shows with arrows 219 the direction of air flowing in air system 103. Thus, as indicated by airflow arrows 219, air is directed to flow, and thereby flows, into air supply plenum 111, then through holes 215L in wall 214-L, then over and around food product 105 on shelves 109 in chamber 108, then through holes 215-R of wall 214-R, then into air return plenum 112, then to and through air-moving device 216, which forces air onward to apparatus 240 (or air-cooling device 217/air-heating device 218), and then air is recirculated to air supply plenum 111. The number, size, and arrangement of holes 215-L, 215-R, together with the size of air-moving device 216, are optimized to achieve a desired airflow velocity and flow path of the air over and around food product 105. According to one application of the present invention, air-moving device 216 sucks air from one side of cabinet 101, the air then going through apparatus 240 (or, alternatively, an evaporator type coil of air-cooling device 217) to cool the air to - according to this application of the present invention - 38 degrees Fahrenheit and is reintroduced to the other side of cabinet 101; according to this application, this air stream - which is held at 38 degrees Fahrenheit (+/-) - helps to thaw frozen food product 105 through convection and then to hold the temperature of food product 105 below 40 degrees Fahrenheit once thawed as cabinet door 113 is opened and closed. Further, FIG. 2 shows three vertical dots between the lowermost shelf 109 and the next higher shelf 109; these three vertical dots collectively signify a vertical ellipsis, thus communicating that more or less shelves 109 could be employed.

Referring now to FIG. 3, there is shown a perspective view of temperature-controlled foodservice unit 100, with portions broken away. FIG. 3 shows body 101, side walls 214-L, 214-R, holes 215-L, 215-R respectively in side walls 214-L, 214-R. FIG. 3 also shows a portion of temperature-controlled shelf system 102, which includes fluid lines 320 and a manifold 321 fluidly connected with and fluidly downstream of fluid lines 320; here, fluid lines 320 and manifold 321 are return fluid lines 320 and return manifold 321, which are fluidly downstream of shelves 109. Upstream of shelves 109, system 102 can similarly include supply fluid lines (not shown) and a supply manifold (not shown) fluidly coupled with and upstream of the supply fluid lines (not shown).

Referring now to FIG. 4, there is shown a schematic diagram of temperature-controlled foodservice unit, more specifically, a fluid (medium) circuit diagram showing flow routes of various fluids circulating in unit 100 (that is, the air of air system 103, the shelf fluid of shelf system 102, and a liquid refrigerant of a refrigerant compressor system 431). FIG. 4 shows temperature-controlled foodservice unit 100, including cabinet 101, shelf system 102, and air system 103; the embodiment of the present invention shown in FIG. 4 is the embodiment described above that employs devices 217, 218, rather than apparatus 240. For the sake of clarity with respect to the various lines in FIG. 4, cabinet 101 (with chamber 108 and shelves 109) is shown twice, but it should be understood that only a single cabinet 101 (with chamber 108 and shelves 109) is contemplated as part of foodservice unit 100 in FIG. 4. According to an exemplary embodiment of the present invention, air system 103 is shown to include air supply plenum 111, air return plenum 112, air-moving device 216, air-cooling device 217, and air-heating device 218, with arrows 219 showing the direction of airflow. Air system 103 further includes an actuator 422 (which can be a solenoid valve 422), a device (optionally)(not shown) associated with air-cooling device 217 (this device is a thermal expansion valve, a capillary tube, or other refrigerant metering device and can also be considered to be an actuator), a compressor pump system 423 (which is configured for pumping a liquid refrigerant), and a liquid refrigerant tank 424 (which is configured for receiving, holding, and dispensing the liquid refrigerant)(liquid refrigerant tank 424 is optional), with arrows 425 showing the direction of flow of the liquid refrigerant in conduits common between air system 103 and shelf system 102 and arrows 425A showing more specifically the direction of flow of the liquid refrigerant within conduits associated with air system 103 only. Solenoid valve 422 is configured for metering and thus allowing passage of the liquid refrigerant from liquid refrigerant tank 424 (which is optional) to air-cooling device 217, in order to control air temperature flowing within air system 103. Air system 103 further includes an air temperature sensor 438 (which can be a thermocouple or similar device), configured for sensing the temperature of the air within air system 103. Solenoid valve 422 is associated with air-cooling device 217; solenoid valve 422 can be spaced apart from or directly attached to air-cooling device 217.

Further, according to an exemplary embodiment of the present invention, shelf system 102 is shown to include shelves 109, a shelf heater tank 426 (configured for storing and/or heating the shelf fluid within shelf system 102), a pump 427 (configured for pumping the liquid within shelf system 102), a fluid-cooling device 428 (configured for cooling the liquid within shelf system 102), and a shelf fluid temperature sensor 439 (which can be a thermocouple or similar device) (configured for sensing the temperature of the shelf fluid within shelf system 102), with arrows 429 showing the direction of the flow of the shelf fluid in shelf system 102 (optionally, shelf system 102 can include a fluid reservoir configured for storing the shelf fluid therein, with the fluid reservoir being positioned at any suitable location in shelf system 102). Shelf system 102 further includes an actuator 430 (which can be a solenoid valve 430), a device (optionally)(not shown) associated with fluid-cooling device 428 (this device is a thermal expansion valve, a capillary tube, or other refrigerant metering device and can also be considered to be an actuator), compressor pump system 423 (which is configured for pumping the liquid refrigerant), and (optional) liquid refrigerant tank 424 (which is configured for receiving, holding, and dispensing the liquid refrigerant), with arrows 425 showing the direction of flow of the liquid refrigerant in conduits common between air system 103 and shelf system 102 and arrows 425B showing more specifically the direction of flow of the liquid refrigerant within conduits associated with shelf system 102 only (compressor pump system 423 and (optional) liquid refrigerant tank 424 can be deemed to be parts of both shelf system 102 and air system 103). Solenoid valve 430 is configured for metering and thus allowing passage of the liquid refrigerant from (optional) liquid refrigerant tank 424 to fluid-cooling device 428, in order to control shelf fluid temperature flowing within shelf system 102. Solenoid valve 430 is associated with fluid-cooling device 428; solenoid valve 430 can be spaced apart from or directly attached to fluid-cooling device 428. Fluid-cooling device 428 can be any suitable type of heat exchanger, for example and not limitation, a liquid (liquid refrigerant) to liquid (fluid flowing through shelves 109) heat exchanger.

Unit 100 further includes refrigerant compressor system 431 (which circulates the liquid refrigerant), which includes solenoid valves 422, 430, compressor pump system 423, and (optional) liquid refrigerant tank 424. Refrigerant compressor system 431 is used to receive and to maintain (optional) reservoir tank 424 of the liquid refrigerant (which is a compressed refrigerant) that can be released as required by solenoid valves 422, 430 and/or the aforementioned thermal expansion valves (not shown) to achieve cooling with respect to the air flowing through air-cooling device 217 and the shelf fluid flowing through fluid-cooling device 428. With respect to air system 103, the air is monitored by air temperature sensor 438 in or near air supply plenum 111. When the air temperature rises above the setpoint (the desired air temperature) as detected by air temperature sensor 438, solenoid valve 422 is actuated by a controller 532 (which may be a single controller or a plurality of controllers) of control system 104, thereby allowing the liquid refrigerant to flow across air-cooling device 217 (or, alternatively, apparatus 240) to cool the air in air system 103. Similarly, with respect to shelf system 102, when the temperature of the shelf fluid - at the supply side of shelves 109 - for shelves 109 rises above the setpoint (the desired shelf fluid temperature) as detected by shelf fluid temperature sensor 439, solenoid valve 430 is actuated by controller 532 of control system 104, thereby allowing the liquid refrigerant into heat exchanger 428 that cools the shelf fluid of shelf system 102.

Heating or cooling of both the air of air system 103 and the shelf fluid of shelf system 102 can be independently controlled to maintain the respective desired setpoints. When air temperature sensor 438 of air system 103 indicates the air is too cool, heating elements of air-heating device 218 can be turned on to warm the air to the desired setpoint. Similarly, the shelf fluid of shelf system 102 can also be warmed when the fluid temperature sensor 439 of shelf system 102 indicates the shelf fluid of shelf system 102 is too cool relative to the setpoint temperature of shelf system 102, wherein such warming can be accomplished in any suitable manner by way of shelf heater tank 426 (which can also be referred to as a fluid supply tank), such as by way of Cal rod type heaters in fluid supply tank 426.

Each of the following can be coupled with frame 107 and located at any suitable location with respect to frame 107: air-moving device 216; solenoid valve 422; air-cooling device 217; air-heating device 218; air-treatment apparatus 240 (according to an alternative embodiment); air temperature sensor 438; air supply plenum 111; air return plenum 112; shelf heater tank 426; pump 427; solenoid valve 430; fluid-cooling device 428; fluid temperature sensor 439; compressor pump system 423; (optional) liquid refrigerant tank 424; controller 532; and all medium-carrying lines or conduits (shown in FIG. 4 and associated with arrows 219, 429, 425, 425A, 425B) that are part of unit 100 and extend to, from, or between any or all of these structures. For example (and without limitation), air-moving device 216, solenoid valve 422, air-cooling device 217, air-heating device 218, shelf heater tank 426, pump 427, solenoid valve 430, fluid-cooling device 428, fluid temperature sensor 439, compressor pump system 423, and (optional) liquid refrigerant tank 424 may be located in a space of unit 100 above chamber 108. Further, if air-treatment device 240 is used instead of devices 217, 218, a fluid circuit diagram similar to what is shown in FIG. 4 can be used, with necessary adjustments being made.

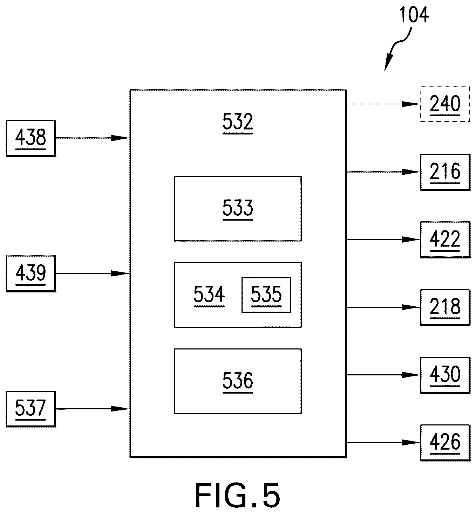

Referring now to FIG. 5, there is shown a schematic diagram of control system 104. As indicated above, unit 100 includes control system 104. Control system 104 includes a controller 532, which includes a processor 533, memory 534, data 535, and instructions 536. Control system 104 can further include an input/output device 537 such as a laptop computer (with keyboard and display) or a touchpad (including keypad functionality and a display), device 537 being configured for a user to interface therewith.

Further, in general, controller 532 may correspond to any suitable processor-based device(s), such as a computing device or any combination of computing devices. Controller 532 may generally include one or more processor(s) 533 and associated memory 534 configured to perform a variety of computer-implemented functions (e.g., performing the methods, steps, algorithms, calculations and the like disclosed herein). Thus, controller 532 may include a respective processor 533 therein, as well as associated memory 534, data 535, and instructions 536, each forming at least part of controller 532. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, memory 534 may generally include memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD), and/or other suitable memory elements. Such memory 534 may generally be configured to store information accessible to the processor(s) 533, including data 535 that can be retrieved, manipulated, created, and/or stored by the processor(s) 533 and the instructions 536 that can be executed by the processor(s) 533. In some embodiments, data 535 may be stored in one or more databases.

Controller 532 can communicate with any input devices (i.e., air temperature sensor 438, fluid temperature sensor 439) and output devices (i.e., air-moving device 216, air-heating device 218, actuator 422, actuator 430, shelf heater tank 426, air-treatment apparatus 240 (which is in broken lines to indicate that apparatus 240 can be an alternative embodiment of the present invention)), and any other controllers, in any suitable manner, such as a wired connection or a wireless connection, such as radio signals (RF), light signals, cellular, WiFi, Bluetooth, Internet, via cloud-based devices such as servers, and/or the like. Further, while not shown, controller 532 can communicate with a remotely located data center, which controller 532 can communicate with by any suitable way, such as those just referenced. Such a data center can include its own controller (and thus processor(s), memory, data, and instructions, substantially similar to that described above with respect to controller 532) which can be configured to perform any of the functions associated with controller 532. Controller 532 and the data center can be a part of any network facilitating such communication therebetween, such as a local area network, a metropolitan area network, a wide area network, a neural network, whether wired or wireless. Further, it is assumed herein that controller 532 is coupled with frame 107 (and thus on board unit 100), but alternatively controller 532 can be located off-site from frame 107 in a remote location.

Control system 104 is operatively coupled with shelf system 102 and air system 103. Control system 104 includes: (a) air temperature sensor 438 which is configured for: (i) sensing an air temperature of the air in temperature-controlled air system 103; and (ii) outputting an air temperature signal corresponding to the air temperature that is sensed; and (b) controller 532 which is configured for: (i) receiving the air temperature signal; (ii) determining, based at least in part on the air temperature signal and a target (desired, setpoint) air temperature, an air temperature adjustment; and (iii) outputting, based at least in part on the air temperature adjustment, an air temperature adjustment signal to air-moving device 216 (for example, air velocity in air system 103 an be controlled), actuator 422, air-heating device 218, and/or air-treatment apparatus 240. Control system 104 further includes: (a) fluid temperature sensor 439 which is configured for: (i) sensing a fluid temperature of the shelf fluid (that is, the shelf fluid temperature) in shelf system 102; and (ii) outputting a fluid temperature signal corresponding to the fluid temperature that is sensed; and (b) controller 532 which is configured for: (i) receiving the fluid temperature signal; (ii) determining, based at least in part on the fluid temperature signal and a target (desired, setpoint) shelf fluid temperature of the shelf fluid of shelf system 102, a fluid temperature adjustment; and (iii) outputting, based at least in part on the fluid temperature adjustment, a fluid temperature adjustment signal to actuator 430 and/or fluid-heating device 426. Further, control system 104 is configured for maintaining the air temperature of the air in air system 103 and the shelf fluid temperature of the shelf fluid in shelf system 102 independently of one another (or, alternatively, in consideration of one another) in accordance with the target air temperature of the air of air system 103 and the target shelf fluid temperature of the shelf fluid if shelf system 102, respectively. Further, air system 103 may include a plurality of air temperature sensors 438 each configured for sensing the air temperature of the air within air system 103, air temperature sensors 438 being at various locations in air system 103 (the direction of this airstream being shown by arrows 219) in order to ascertain various product and environmental conditions to be used by controller 532. It can be appreciated that, though the air temperature is referenced in the singular herein, the air temperature at the location of each respective air temperature sensor 438 may be different relative to one another, with the result that each respective air temperature sensor 438 senses respectively different values of the air temperature and outputs a respective air temperature signal corresponding to the respectively different values of the air temperature at the respective locations of the air temperature sensors 438. Shelf system 102 may include a plurality of shelf fluid temperature sensors 439 each configured for sensing the temperature of the shelf fluid within shelf system 102, shelf fluid temperature sensors 439 being at various locations in shelf system 102 (the direction of the flow of the shelf fluid being shown by arrows 429) in order to ascertain various product and environmental conditions to be used by controller 532. It can be appreciated that, though the shelf fluid temperature is referenced in the singular herein, the shelf fluid temperature at the location of each respective shelf fluid temperature sensor 439 may be different relative to one another, with the result that each respective shelf fluid temperature sensor 439 senses respectively different values of the shelf fluid temperature and outputs a respective shelf fluid temperature signal corresponding to the respectively different values of the shelf fluid temperature at the respective locations of the shelf fluid temperature sensors 439.

In use, a user can place food product 105 on shelves 109 of unit 100. Unit 100 can be powered for instance by electrical power, and user can thereby electrically power unit 100. By way of input/output device 537, user can set the target air temperature of the air of air system 103 and the target shelf fluid temperature of the shelf fluid of shelf system 102. Thus, sensors 438, 439 respectively sense the air temperature and shelf fluid temperature and provide this data to controller 532. Depending upon what adjustments need to be made so that the actual air temperature sensed by air temperature sensor 438 and the actual shelf fluid temperature sensed by fluid temperature sensors 439, controller 532 can output adjustment signals to solenoid valve 422 and/or solenoid valve 430 so that the actual air temperature matches the target air temperature and the actual shelf fluid temperature matches the target shelf fluid temperature. In this way, heating or cooling of food product 105 or maintenance of the temperature of food product 105 can be accomplished. Such heat transfer is thus accomplished efficiently, using thermal conduction, thermal radiation, and thermal convection.

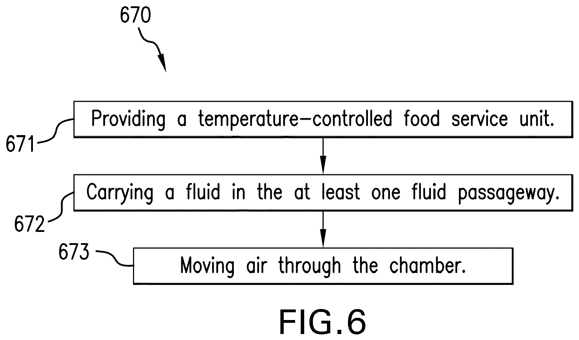

Referring now to FIG. 6, there is shown a flow diagram showing a method 670 of using a temperature-controlled foodservice unit 100. Method 670 includes the steps of: providing 671 that the temperature-controlled foodservice unit 100 includes a body 101 and a plurality of temperature-controlled systems 102, 103, the body 101 including a frame 107 and defining a chamber 108, the plurality of temperature-controlled systems 102, 103 being operatively coupled with the frame 107 and configured for transferring heat with respect to a food product 105 positioned within the chamber 108, the plurality of temperature-controlled systems 102, 103 including a temperature-controlled shelf system 102 and a temperature-controlled air system 103, the temperature-controlled shelf system 102 including at least one shelf 109 and at least one fluid passageway 110, the at least one shelf 109 being positioned within the chamber 108, the at least one fluid passageway 110 being associated with the at least one shelf 109; carrying 672, by the at least one fluid passageway 110, a fluid in the at least one fluid passageway 110 so as to transfer heat by thermal conduction and thermal radiation with respect to the food product 105 positioned on the at least one shelf 109; and moving 673, by the temperature-controlled air system 103, air through the chamber 108 so as to transfer heat by thermal convection with respect to the food product 105 positioned on the at least one shelf 109. Temperature-controlled air system 103 can include an air supply plenum 111 and an air return plenum 112, the air supply plenum 111 including a first wall 214-L with a first plurality of holes 215-L, the air return plenum 112 including a second wall 214-R with a second plurality of holes 215-R. Temperature-controlled air system 103 can include an air-moving device 216 configured for moving the air within the temperature-controlled air system 103 and thereby for increasing or decreasing a velocity of the air. Temperature-controlled air system 103 can include: (a)(i) an air-cooling device 217 configured for cooling the air before the air enters the air supply plenum 111 and (ii) a first actuator 422 associated with the air-cooling device 217; or (b) an air-treatment apparatus 240 configured for cooling the air before the air enters the air supply plenum 111. Temperature-controlled air system 103 can include: (a) an air-heating device 218 configured for heating the air before the air enters the air supply plenum 111; or (b) the air-treatment apparatus 240 configured for heating the air before the air enters the air supply plenum 111. Temperature-controlled shelf system 102 can include a fluid-cooling device 428 configured for cooling the fluid and a fluid-heating device 426 configured for heating the fluid. Temperature-controlled air system 103 can further include a control system 104 operatively coupled with the temperature-controlled shelf system 102 and the temperature-controlled air system 103, the control system including: (a) a first sensor 438 configured for: (i) sensing an air temperature of the air in the temperature-controlled air system 103; and (ii) outputting an air temperature signal corresponding to the air temperature that is sensed; and (b) a controller 532 configured for: (i) receiving the air temperature signal; (ii) determining, based at least in part on the air temperature signal, an air temperature adjustment; and (iii) outputting, based at least in part on the air temperature adjustment, an air temperature adjustment signal to at least one of the air-moving device 216, the first actuator 422, the air-heating device 218, and air-treatment apparatus 240. Temperature-controlled shelf system 102 can further include a second actuator 430 associated with the fluid-cooling device 428, wherein the control system 104 includes: (a) a second sensor 439 configured for: (i) sensing a fluid temperature of the shelf fluid in the temperature-controlled shelf system 102; and (ii) outputting a fluid temperature signal corresponding to the fluid temperature that is sensed; and (b) the controller configured for: (i) receiving the fluid temperature signal; (ii) determining, based at least in part on the fluid temperature signal, a fluid temperature adjustment; and (iii) outputting, based at least in part on the fluid temperature adjustment, a fluid temperature adjustment signal to at least one of the second actuator 430 and the fluid-heating device 426. Control system 104 can be configured for maintaining the air temperature of the air in the temperature-controlled air system 103 and the fluid temperature of the shelf fluid in the temperature-controlled shelf system 102 independently of one another in accordance with a target air temperature and a target fluid temperature, respectively. Further, the temperature control of air system 103 and shelf system 102 may also be integrated into control system 104 and thus at least in part into controller 532.

It is to be understood that the steps of method 670 are performed by controller 532 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by controller 532 described herein, such as the method 670, is implemented in software code or instructions which are tangibly stored on a tangible computer readable medium. The controller 532 loads the software code or instructions via a direct interface with the computer readable medium or via a wired and/or wireless network. Upon loading and executing such software code or instructions by controller 532, controller 532 may perform any of the functionality of controller 532 described herein, including any steps of the method 670.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

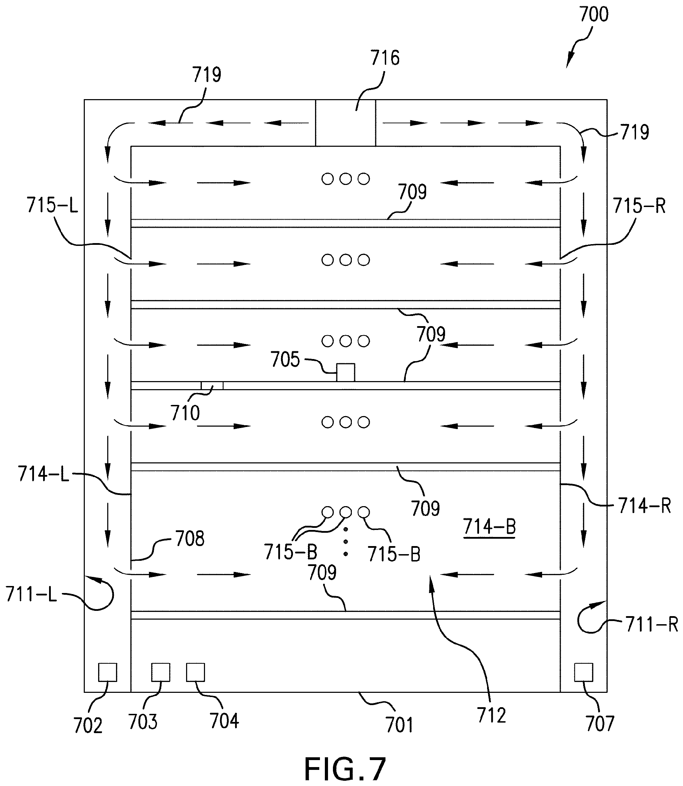

Referring now to FIGS. 7-11, there is shown another embodiment of a temperature-controlled foodservice unit, now temperature-controlled foodservice unit 700, of the present invention (as with unit 100, unit 700 can be viewed as a thawing cabinet, according to one application of unit 700). Unit 700 is substantially similar to unit 100, unless shown and/or described otherwise. Thus, the reference numbers of FIGS. 1-6 are the same or are increased by a multiple of 100 in FIGS. 7-11. The primary differences between what is shown and/or described with respect to FIGS. 7-11 and what is shown and/or described with respect to FIGS. 1-6 concern (a) the number and location of the air supply plenum and the location of the air return plenum, and (b) employment of heat exchangers or a lack thereof. Briefly, regarding (a), whereas FIGS. 1-6 employ a single air supply plenum 111 and an air return plenum 112 on the opposing side of unit 100, FIGS. 7-11 employ two air supply plenums 711-L, 711-R respectively on the left and right sides of unit 700 and an air return plenum 712 at the rear of unit 700. Regarding (b), whereas FIGS. 1-6 employ air-cooling device 217 that is in parallel with fluid cooling device 428 and that cools air in air system 103 using a refrigerant of refrigerant system 431, FIGS. 7-11 omits such an air-cooling device 217 and instead uses a heat exchanger 941 that is shared by both a temperature-controlled air system 703 and a temperature-controlled shelf system 702 to effect heat transfer with respect to the air of the temperature-controlled air system 703.

Before discussing the embodiment of FIGS. 7-11 in detail, the two primary differences are summarized in more detail. Regarding (a)(concerning the air supply plenum and the air return plenum), FIGS. 1-6 disclose that unit 100 moves air from left to right in chamber 108 across product 105. The left side of unit 100 provides air supply plenum 111 using left side wall 214-L with holes 215-L, and the right side of unit 100 provides air return plenum 112 using right side wall 214-R with holes 215-R, circulating the air back to blower 216 that creates the airflow (the direction of which being shown by 219. This embodiment is effective but can be improved upon. With the direction 219 of airflow, food product 105 in the left side of chamber 108 thaws quicker than food product 105 in the right side of chamber 108, because the air cooled going from left to right and food product 105 on the right thawed slower due to the cooler air moving across such food product 105. To address this, the embodiment shown in FIGS. 7-11 uses both the left and right sides of unit 700 as air supply plenums 711-L, 711-R and places the air return plenum 712 at the rear of unit 700. This causes the supply air to impinge food product 105 on both the left and right sides with air at the same temperature as opposed to moving from one side (left) as the supply and the other side (right) as the return. This advantageously evens up food product thaw times from left to right considerably. Air return plenum 712 added along rear wall 714-B has holes therein at each shelf location so that the airflow is now forced from both left and right side walls 714-L, 714-R to rear wall 714-B of unit 700 across food product 705 on shelves 709.

Regarding (b)(heat exchangers), this involves, in part, air-cooling device 217 (which can be an evaporator-type heat exchanger, and thus can be referred to as an evaporator) used to cool the air in air system 103 and the air-heating device 218 used to warm the air that circulates as described above in air system 103.

In FIG. 4, refrigerant system 431 is shown to include two parallel branches downstream of (optional) liquid refrigerant tank 424, one branch having flow direction 425A and actuator 422 and running through air-cooling device 217 (that is, this branch is for a standard refrigerant evaporator 217 that chilled the air (this embodiment also has air-heating device 218 to warm the air as required), the other branch having flow direction 425B and actuator 430 and running through fluid-cooling device 428 (that is, this branch runs through a refrigerant-to-fluid plate-style heat exchanger 428 that supplies shelf fluid to shelves 109). One branch is thus dedicated to air system 103, and the other branch is dedicated to shelf system 102, with the result that air system 103 are shelf system 102 are independent of one another (the branches, in a sense, can be viewed as separate refrigerant circuits). Thus, FIGS. 1-6 provides for independent control of both the temperature of shelf system 102 and the temperature of air system 103 (in this sense, unit 103 has two control circuits for this independent control).

On the other hand, with respect to (b)(heat exchangers), only heat exchanger 928 - which, according to one embodiment, is a plate-style refrigerant-to-fluid (liquid) heat exchanger and corresponds to fluid-cooling device 428 - is used in a refrigerant system 931 (and thus in a refrigerant circuit formed by refrigerant system 931), and thus a heat exchanger corresponding to air-cooling device 217, above, is not used and thus is not part of refrigerant system 931 (or air system 703 or shelf system 702). This arrangement in FIGS. 7-11 thus provides a single refrigerant circuit (not the parallel branches as shown in FIG. 4) and is the source of chilled or heated shelf fluid that only ran to shelves 109 (FIGS. 1-6). The change in FIGS. 7-11 relative to FIGS. 1-6 is such that unit 700 adds a radiator-type heat exchanger 941 that the shelf fluid of shelf system 702 runs through prior to running through shelves 709. Further, the air of air system 703 from blower 716 circulates through, by, or across heat exchanger 941 (which is a finned radiator-type heat exchanger), and heat exchanger 941 uses the shelf fluid of shelf system 702 as a source of heating or cooling. This arrangement eliminates the need for the separate refrigerant evaporator (air-cooling device 217) and a heater (air-heating device 218) for the air. Further, unit 700 measures the air temperature of the air (using temperature sensor(s) 938) being supplied to food product 705 in chamber 708 and then adjusts the fluid temperature of the shelf fluid of shelf system 702 as needed to change the air temperature (and the shelf fluid temperature) either up or down as required. Unit 700 of FIGS. 7-11 is a simpler and less expensive arrangement relative to unit 100 of FIGS. 1-6, though unit 100 of FIGS. 1-6 provides for faster thaw times relative to unit 700 of FIGS. 7-11.

Referring now to FIG. 7, there is shown schematically a front view of temperature-controlled foodservice unit 700, with portions broken away. FIG. 1 generically shows unit 700 as well, unless shown and/or described differently herein. Thus, unit 700 includes: a body 701 including a frame 707 and defining a chamber 708; and a plurality of temperature-controlled systems 702, 703 operatively coupled with frame 707 and configured for transferring heat with respect to a food product 705 positioned within chamber 708, the plurality of temperature-controlled systems 702, 703 including: a temperature-controlled shelf system 702 including at least one shelf 709 and at least one fluid passageway 710, the at least one shelf 709 being positioned within chamber 708, the at least one fluid passageway 710 being associated with the at least one shelf 709 and configured for carrying shelf fluid therein so as to transfer heat by thermal conduction and thermal radiation with respect to food product 705 positioned on the at least one shelf 709; and a temperature-controlled air system 703 configured for moving air through chamber 708 so as to transfer heat by thermal convection with respect to food product 705 positioned on the at least one shelf 709 and for supplying air to chamber 708 from opposing directions. FIG. 7 shows unit 700 with five shelves, but the vertical dots between the two bottom shelves 709 indicates that any number of additional shelves could be placed between those shelves 709, thereby showing that unit 700 is not limited to five shelves 709 but can have more or less shelves 709. The desired setpoint temperatures of temperature-controlled shelf system 702 and temperature-controlled air system 703 can be different from one another, though not entirely independent from one another in this embodiment of the present invention, in light of heat exchanger 941. Temperature-controlled shelf system 702 forms a shelf fluid circulation system, wherein, according to an exemplary embodiment of the present invention, the shelf fluid is a liquid, which is assumed to be the case herein. Temperature-controlled air system 703 forms an air circulation system. Unit 700 further includes control system 704.

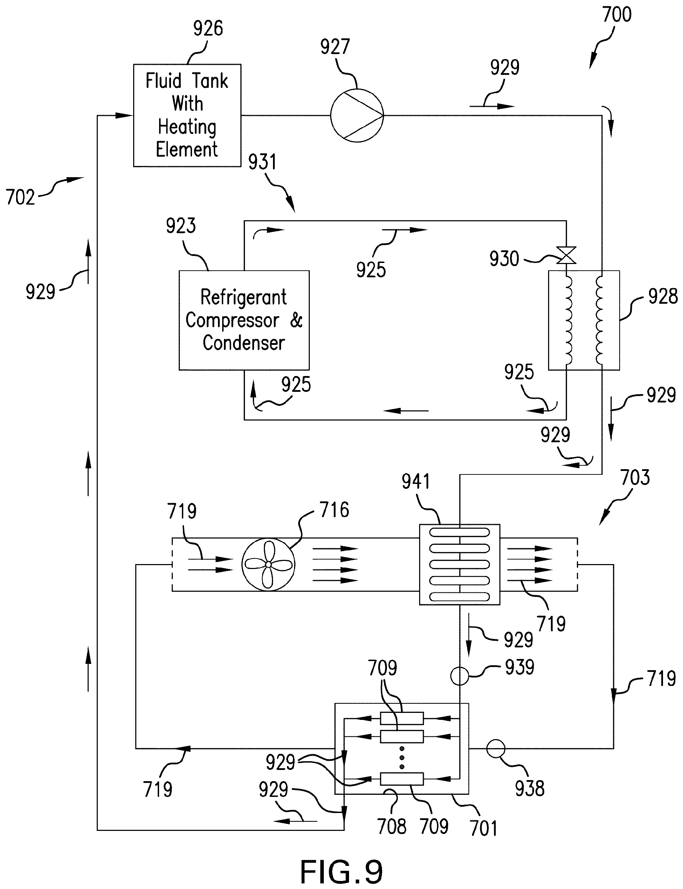

Further, temperature-controlled air system 703 includes a first air supply plenum 711-L, a second air supply plenum 711-R, and an air return plenum 712, first air supply plenum 711-L including a first wall 714-L with a first plurality of holes 715-L, second air supply plenum 711-R including a second wall 714-R with a second plurality of holes 715-R, air return plenum 712 including a third wall 714-B with a third plurality of holes 715-B. First wall 714-L is a left side wall 714-L, second wall 714-R is a right side wall 714-R opposing left side wall 714-L, and third wall 714-B is a rear wall 714-B (which can also be referred to as a back wall 714-B). Air supply plenums 711-L, 711-R are located at the left and right sides of unit 700 and thus oppose one another, and air return plenum 712 is located at the rear of unit 700. Holes 715-L, 715-R are configured for allowing air to flow from an interior of air supply plenums 711-L, 711-R to chamber 708, and holes 715-B are configured for allowing air to flow from chamber 708 to air return plenum 712. Holes 715-L, 715-R are configured for directing the air flow over and around food product 705 in chamber 708 as air proceeds to exit chamber 708 through holes 715-B. That is, air is introduced via air-moving device 716 into chamber 708 by way of holes 715-L, 715-R of air supply plenums 711-L, 711-R, flows across food product 705, and exits chamber 708 the rear of unit 700 by way of holes 715-B of air return plenum 712. The number, size, and arrangement of holes 715-L, 715-R, 715-B, together with the size of air-moving device 716, are optimized to achieve a desired airflow velocity and flow path of the air over and around food product 705. Air system 703 further includes air-moving device 716 (which can also be referred to as a fan or a blower) and is configured for circulating air within air system 703, as indicated by arrows 719 showing the flow direction of the air; thus air-moving device 716 is configured for moving the air within temperature-controlled air system 703 and thereby for increasing or decreasing a velocity of the air, air-moving device 716 being configured for receiving the air from holes 715-B and for moving the air to holes 715-L, 715-R. Air system 703 and shelf system 702 (and thus also unit 700) includes heat exchanger 941 (FIG. 9), considering that heat exchanger 941 is in the respective flow circuits of air system 703 and shelf system 702.

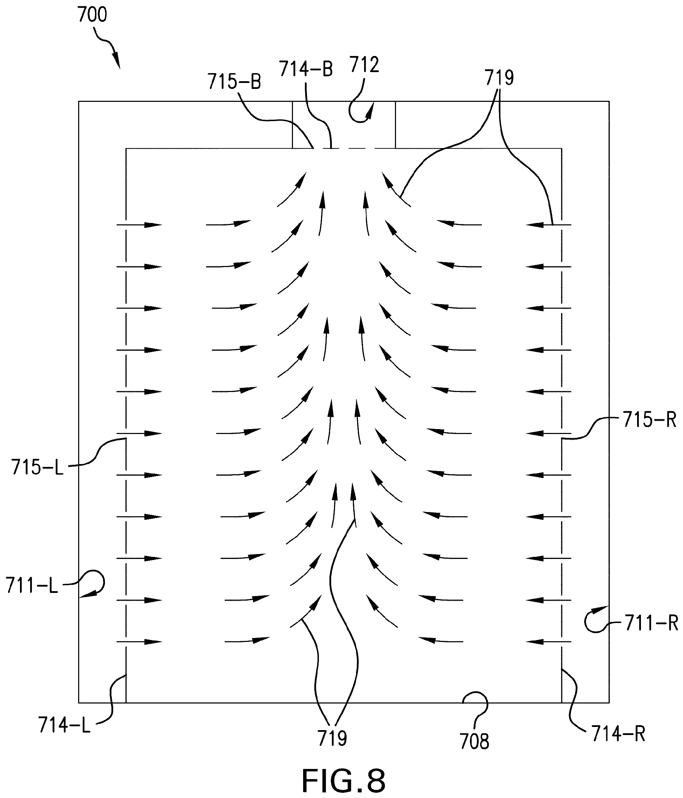

Referring now to FIG. 8, there is shown schematically a top view of temperature-controlled foodservice unit 700, with portions broken away. FIG. 8 shows what is typical regarding the airflow relative to each shelf 709, though a particular shelf 709 is not shown in FIG. 8. FIG. 8 shows that unit 700 includes left-side air supply plenum 711-L with left-side wall 714-L, right-side air supply plenum 711-R with right-side wall 714-R, and air return plenum 712 with rear wall 714-B. FIG. 8 shows that wall 714-L includes holes 715-L, wall 714-R includes holes 715-R, and rear wall 714-B includes holes 715-B. Air is introduced into chamber 708 via holes 715-L, 715-R of left and right air supply plenums 711-L, 711-R and is returned to return air plenum 712 via holes 715-B. Air return plenum 712 and thus also rear wall 714-B running from at least near a bottom of unit 700 to at least near a top of unit 700, wherein air return plenum 712 terminates at an inlet of air-moving device 716 (not shown in FIG. 8). Outlet airflow from air-moving device 716 is directed across heat exchanger 941 (which is a radiator-type heat exchanger) to cool or to warm the air (which can also be referred to as cabinet air) before the air enters the left and right air supply plenums 711-L, 711-R.

Referring now to FIG. 9, there is shown schematically fluid circuits of unit 700, according to an exemplary embodiment of the present invention, more specifically, a fluid (medium) circuit diagram showing flow routes of various fluids circulating in unit 700, that is, the air of air system 703 (and thus an air circuit), the shelf fluid of shelf system 702 (and thus a shelf fluid circuit), and a liquid refrigerant of a refrigerant system 931 of unit 700 (and thus a refrigerant circuit). FIG. 9 shows temperature-controlled foodservice unit 700, including cabinet 701, shelf system 702, and air system 703. Though FIG. 9 shows air entering cabinet 701 on the right side of cabinet 701 and exiting on the left side of cabinet 701, this is only for schematic purposes and is not intended to contradict what is described above with respect to the airflow in air system 703 and thus the location of air supply plenums 711-L, 711-R and air return plenum 712. According to an exemplary embodiment of the present invention, FIG. 9 shows that air system 703 includes air-moving device 716 and heat exchanger 941 (which can also be deemed to be a part of shelf system 702). Air system 703 further includes at least one air temperature sensor 938 (which can be a thermocouple or similar device), configured for sensing the temperature of the air within air system 703. At least one air temperature sensor 938 can be used at any suitable location, or, for example, at least one air temperature sensor 938 can be associated with air supply plenum 711-L and at least one air temperature sensor 938 can be associated with air supply plenum 711-R. Though a part of refrigerant system 931, actuator 930 can also be deemed to be part of air system 703, such that air system 703 includes actuator 930 as well. Actuator 930 can be spaced apart from or directly attached to fluid-cooling device 928. Actuator 930 can be a solenoid valve, a thermal expansion valve, or any other suitable refrigerant control device. Further, air system 703 may include a plurality of air temperature sensors 938 each configured for sensing the air temperature of the air within air system 703, air temperature sensors 938 being at various locations in air system 703 (the direction of this airstream being shown by arrows 719) in order to ascertain various product and environmental conditions to be used by controller 1032. It can be appreciated that, though the air temperature is referenced in the singular herein, the air temperature at the location of each respective air temperature sensor 938 may be different relative to one another, with the result that each respective air temperature sensor 938 senses respectively different values of the air temperature and outputs a respective air temperature signal corresponding to the respectively different values of the air temperature at the respective locations of the air temperature sensors 938.

According to an exemplary embodiment of the present invention, FIG. 9 shows that shelf system 702 includes shelves 709, a shelf tank 926 (which can be referred to as a fluid tank with a heating element configured for heating the fluid circulating in shelf system 702, wherein tank 926 is configured for storing and/or heating the shelf fluid within shelf system 702), a pump 927 (configured for pumping the liquid within shelf system 702), fluid-cooling device 928 (configured for cooling the liquid within shelf system 702), at least one shelf fluid temperature sensor 939 (which can be a thermocouple or similar device)(configured for sensing the temperature of the shelf fluid within shelf system 702), with arrows 929 showing the direction of the flow of the shelf fluid in shelf system 702 (optionally, shelf system 702 can include a fluid reservoir configured for storing the shelf fluid therein, with the fluid reservoir being positioned at any suitable location in shelf system 702), and heat exchanger 941. Shelf system 702 can also be deemed to include actuator 930. Actuator 930 is configured for metering and thus allowing passage of the liquid refrigerant through actuator 930 to fluid-cooling device 928, in order to control shelf fluid temperature of the shelf fluid flowing within shelf system 702 and thus also to control the air temperature of the air flowing in air system 703. Further, shelf system 702 may include a plurality of shelf fluid temperature sensors 939 each configured for sensing the temperature of the shelf fluid within shelf system 702, shelf fluid temperature sensors 939 being at various locations in shelf system 702 (the direction of the flow of the shelf fluid being shown by arrows 929) in order to ascertain various product and environmental conditions to be used by controller 1032. It can be appreciated that, though the shelf fluid temperature is referenced in the singular herein, the shelf fluid temperature at the location of each respective shelf fluid temperature sensor 939 may be different relative to one another, with the result that each respective shelf fluid temperature sensor 939 senses respectively different values of the shelf fluid temperature and outputs a respective shelf fluid temperature signal corresponding to the respectively different values of the shelf fluid temperature at the respective locations of the shelf fluid temperature sensors 939.

Unit 700 further includes refrigerant system 931 (which circulates the liquid refrigerant), which includes refrigerant compressor and condenser 923, actuator 930, and fluid-cooling device 928 (which can be a heat exchanger, in particular a fluid-refrigerant plate heat exchanger). Actuator 930 can meter refrigerant so as to control the temperature of shelf fluid flowing through heat exchanger 928 and also to affect (raise or lower) the temperature of the air flowing through, by, or across heat exchanger 941. Arrows 925 show the direction of flow of the liquid refrigerant in refrigerant system 931.

With respect to air system 703, the air is monitored by at least one air temperature sensor 938 in or near air supply plenums 711-L, 711-R. When the air temperature rises above the setpoint (the desired air temperature) as detected by air temperature sensor(s) 938, actuator 930 can be actuated by a controller 1032 (which may be a single controller or a plurality of controllers) of control system 704, thereby allowing the liquid refrigerant to flow through, by, or across fluid-cooling device 928 to cool the shelf fluid in shelf system 702 and the air in air system 703. Similarly, with respect to shelf system 702, when the temperature of the shelf fluid - for example, at the supply side of shelves 709 - for shelves 709 rises above the setpoint (the desired shelf fluid temperature) as detected by shelf fluid temperature sensor(s) 939, actuator 930 can be actuated by controller 1032 of control system 704, thereby allowing the liquid refrigerant into heat exchanger 928 that cools the shelf fluid of shelf system 702. Each structure of unit 700 - including each structure discussed and/or shown herein of unit 700 - can be coupled with frame 707.

Accordingly, heat exchanger 941 is configured for conditioning (heating or cooling) the air before the air enters air plenums 711-L, 711-R and thus chamber 708 by way of holes 715-L, 715-R. Further, temperature-controlled shelf system 702 is configured such that the fluid carried therein flows through heat exchanger 941 before the shelf fluid enters chamber 708 such that the shelf fluid and the air transfer heat by way of heat exchanger 941 (that is, by way of heat exchanger 941, the shelf fluid and the air thermally interact with one another, such that, depending upon the relative temperatures of the shelf fluid and the air (and assuming the shelf fluid flowing through, and the air flowing through, by, or across, heat exchanger 941 are not at exactly the same temperature), the shelf fluid transfers heat to the air, or the air transfers heat to the shelf fluid). Further, refrigerant system 931 is configured for circulating the refrigerant therein, wherein the temperature-controlled shelf system 702 includes fluid-heating device 926 configured for heating the shelf fluid and heat exchanger 928 configured for cooling the fluid by way of the refrigerant, and temperature-controlled foodservice unit 700 is configured for using the refrigerant to cool the shelf fluid of temperature-controlled shelf system 702 and thereby also the air of temperature-controlled air system 703. That is, because of heat exchanger 941 and the thermal interaction of the shelf fluid of shelf system 702 and the air of air system 703 thereby, fluid-heating device 926 warms both the shelf fluid of shelf system 702 and the air of air system 703 and heat exchanger 928 cools both the shelf fluid of shelf system 702 and the air of air system 703. Thus, when the shelf fluid temperature of shelf system 702 is adjusted for shelves 709, this adjustment also affects the air temperature of air system 703; conversely, when the air temperature of air system 703 is adjusted, this adjustment also affects the shelf fluid temperature of shelf system 702.

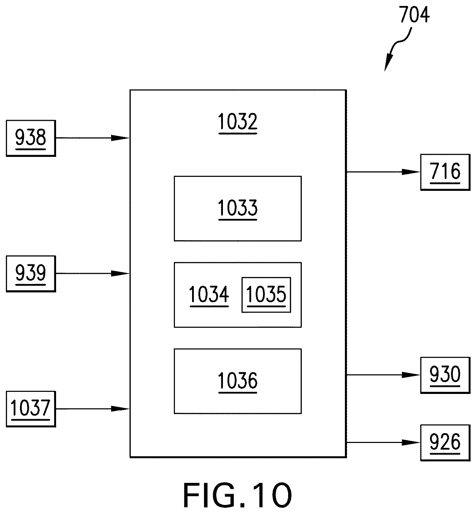

Referring now to FIG. 10, there is shown schematically a diagram of control system 704 of FIG. 7, according to an exemplary embodiment of the present invention. Control system 704 includes controller 1032. Controller 1032 includes processor 1033, memory 1034, data 1035, and instructions 1036. Controller 1032 receives input data from air temperature sensor(s) 938, shelf fluid temperature sensor(s) 939, and input/output device 1037. Controller outputs control signals to air-moving device 716, actuator 930, and shelf fluid heater tank 926.

Control system 704 is operatively coupled with temperature-controlled shelf system 702 and temperature-controlled air system 703. Control system 704 includes: air temperature sensor(s) 938 configured for: sensing an air temperature of the air in the temperature-controlled air system 703; outputting an air temperature signal corresponding to the air temperature that is sensed; a controller 1032 configured for: receiving the air temperature signal; determining, based at least in part on the air temperature signal, an air temperature adjustment; outputting, based at least in part on the air temperature adjustment, an air temperature adjustment signal to at least one of air-moving device 716 and refrigerant actuator 930; shelf fluid sensor(s) 939 configured for: sensing a fluid temperature of the fluid in the temperature-controlled shelf system 702; outputting a fluid temperature signal corresponding to the fluid temperature that is sensed; wherein controller 1032 is further configured for: receiving the fluid temperature signal; determining, based at least in part on the fluid temperature signal, a fluid temperature adjustment; outputting, based at least in part on the fluid temperature adjustment, a fluid temperature adjustment signal to at least one of the fluid-heating device 926 and refrigerant actuator 930. By way of heat exchanger 941, the temperature of the shelf fluid of shelf system 702 can affect the temperature of the air in air system 703, and this can be accounted for by controller 1032 so that the shelf fluid in chamber 708 and the air in chamber 708 is at the respective target temperatures. Controller 1032 can be configured to account for how the refrigerant affects (in terms of heat transfer) the shelf fluid of shelf system 702 and how the shelf fluid affects (in terms of heat transfer) the air of air system 703 so that the target temperatures of the shelf fluid and air are reached in chamber 708, and in this way controller 1032 can cause a suitable amount of refrigerant to be metered by actuator 930.

In use, a user can place food product 705 on shelves 709 of unit 700. Unit 700 can be powered for instance by electrical power, and user can thereby electrically power unit 700. By way of input/output device 1037, user can set the target air temperature of the air of air system 703 and/or the target shelf fluid temperature of the shelf fluid of shelf system 702. Thus, sensors 938, 939 respectively sense the air temperature and shelf fluid temperature and provide this data to controller 1032. Depending upon what adjustments need to be made so that the actual air temperature sensed by air temperature sensor(s) 938 and the actual shelf fluid temperature sensed by fluid temperature sensor(s) 939, controller 1032 can output adjustment signals to actuator 930 so that the actual air temperature matches the target air temperature and/or the actual shelf fluid temperature matches the target shelf fluid temperature. By way of heat exchanger 941, the temperature of the shelf fluid of shelf system 702 can affect the temperature of the air in air system 703, and this can be accounted for by controller 1032 so that the shelf fluid in chamber 708 and the air in chamber 708 is at the respective target temperatures. In this way, heating or cooling of food product 705 or maintenance of the temperature of food product 705 can be accomplished. Such heat transfer is thus accomplished efficiently, using thermal conduction, thermal radiation, and thermal convection.

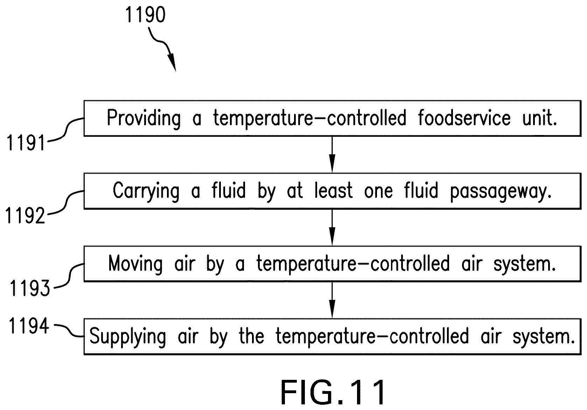

Referring now to FIG. 11, there is shown a flow diagram showing a method 1190 of using a temperature-controlled foodservice unit 700. Method 1190 includes the steps of: providing 1191 that the temperature-controlled foodservice unit 700 includes a body 701 and a plurality of temperature-controlled systems 702, 703, the body 701 including a frame 707 and defining a chamber 708, the plurality of temperature-controlled systems 702, 703 being operatively coupled with the frame 707 and configured for transferring heat with respect to a food product 705 positioned within the chamber 708, the plurality of temperature-controlled systems 702, 703 including a temperature-controlled shelf system 702 and a temperature-controlled air system 703, the temperature-controlled shelf system 702 including at least one shelf 709 and at least one fluid passageway 710, the at least one shelf 709 being positioned within the chamber 708, the at least one fluid passageway 710 being associated with the at least one shelf 709; carrying 1192, by the at least one fluid passageway 710, a fluid in the at least one fluid passageway 710 so as to transfer heat by thermal conduction and thermal radiation with respect to the food product 705 positioned on the at least one shelf 709; moving 1193, by the temperature-controlled air system 703, air through the chamber 708 so as to transfer heat by thermal convection with respect to the food product 705 positioned on the at least one shelf 709; and supplying 1194, by the temperature-controlled air system 703, air to the chamber 708 from opposing directions. Optionally, the temperature-controlled air system 702 includes a first air supply plenum 711-L, a second air supply plenum 711-R, and an air return plenum 712, the first air supply plenum 711-L including a first wall 714-L with a first plurality of holes 715-L, the second air supply plenum 71-R including a second wall 714-R with a second plurality of holes 715-L, the air return plenum 712 including a third wall 714-B with a third plurality of holes 715-B. Optionally, the first wall 714-L is a first side wall 714-L, the second wall 714-R is a second side wall 714-R opposing the first side wall 714-R, and the third wall 714-B is a rear wall 714-B. Optionally, the temperature-controlled air system 703 includes an air-moving device 716 configured for moving the air within the temperature-controlled air system 703 and thereby for increasing or decreasing a velocity of the air, the air-moving device 716 being configured for receiving the air from the third plurality of holes 715-B and for moving the air to first plurality of holes 715-L and the second plurality of holes 715-R. Optionally, the temperature-controlled foodservice unit 700 further includes a first heat exchanger 941 configured for conditioning the air before the air enters the chamber 708 by way of the first plurality of holes 715-L and the second plurality of holes 715-R. Optionally, the temperature-controlled shelf system 702 is configured such that the fluid carried therein flows through the first heat exchanger 941 before the fluid enters the chamber 708 such that the fluid and the air transfer heat by way of the first heat exchanger 741. Optionally, the temperature-controlled foodservice unit 700 further includes a refrigerant system 931 configured for circulating a refrigerant therein, wherein the temperature-controlled shelf system 702 includes a fluid-heating device 926 configured for heating the fluid and a second heat exchanger 928 configured for cooling the fluid by way of the refrigerant, and the temperature-controlled foodservice unit 700 is configured for using the refrigerant to cool the fluid of the temperature-controlled shelf system 702 and thereby also the air of the temperature-controlled air system 703. Optionally, the temperature-controlled foodservice unit further includes a control system 704 operatively coupled with the temperature-controlled shelf system 702 and the temperature-controlled air system 703, the control system 704 including: a first sensor(s) 938 configured for: sensing an air temperature of the air in the temperature-controlled air system 702; outputting an air temperature signal corresponding to the air temperature that is sensed; a controller 1032 configured for: receiving the air temperature signal; determining, based at least in part on the air temperature signal, an air temperature adjustment; outputting, based at least in part on the air temperature adjustment, an air temperature adjustment signal to at least one of the air-moving device 716 and a refrigerant actuator 930; a second sensor(s) 939 configured for: sensing a fluid temperature of the fluid in the temperature-controlled shelf system 702; outputting a fluid temperature signal corresponding to the fluid temperature that is sensed; wherein the controller 1032 is further configured for: receiving the fluid temperature signal; determining, based at least in part on the fluid temperature signal, a fluid temperature adjustment; outputting, based at least in part on the fluid temperature adjustment, a fluid temperature adjustment signal to at least one of the fluid-heating device 926 and the refrigerant actuator 930.

While this invention has been described with respect to at least one embodiment, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A temperature-controlled foodservice unit, comprising:
a body including a frame and defining a chamber; and
a plurality of temperature-controlled systems operatively coupled with the frame and configured for transferring heat with respect to a food product positioned within the chamber, the plurality of temperature-controlled systems including:
a temperature-controlled shelf system including at least one shelf and at least one fluid passageway, the at least one shelf being positioned within the chamber, the at least one fluid passageway being associated with the at least one shelf and configured for carrying a fluid therein so as to transfer heat by thermal conduction and thermal radiation with respect to the food product positioned on the at least one shelf; and
a temperature-controlled air system configured for moving air through the chamber so as to transfer heat by thermal convection with respect to the food product positioned on the at least one shelf and for supplying air to the chamber from opposing directions.

2. The temperature-controlled foodservice unit according to claim 1, wherein the temperature-controlled air system includes a first air supply plenum, a second air supply plenum, and an air return plenum, the first air supply plenum including a first wall with a first plurality of holes, the second air supply plenum including a second wall with a second plurality of holes, the air return plenum including a third wall with a third plurality of holes.

3. The temperature-controlled foodservice unit according to claim 2, wherein the first wall is a first side wall, the second wall is a second side wall opposing the first side wall, and the third wall is a rear wall.

4. The temperature-controlled foodservice unit according to claim 2, wherein the temperature-controlled air system includes an air-moving device configured for moving the air within the temperature-controlled air system and thereby for increasing or decreasing a velocity of the air, the air-moving device being configured for receiving the air from the third plurality of holes and for moving the air to the first plurality of holes and the second plurality of holes.

5. The temperature-controlled foodservice unit according to claim 4, further comprising a first heat exchanger configured for conditioning the air before the air enters the chamber by way of the first plurality of holes and the second plurality of holes.

6. The temperature-controlled foodservice unit according to claim 5, wherein the temperature-controlled shelf system is configured such that the fluid carried therein flows through the first heat exchanger before the fluid enters the chamber such that the fluid and the air transfer heat by way of the first heat exchanger.

7. The temperature-controlled foodservice unit according to claim 6, further comprising a refrigerant system configured for circulating a refrigerant therein, wherein the temperature-controlled shelf system includes a fluid-heating device configured for heating the fluid and a second heat exchanger configured for cooling the fluid by way of the refrigerant, and the temperature-controlled foodservice unit is configured for using the refrigerant to cool the fluid of the temperature-controlled shelf system and thereby also the air of the temperature-controlled air system.

8. The temperature-controlled foodservice unit according to claim 7, further comprising a control system operatively coupled with the temperature-controlled shelf system and the temperature-controlled air system, the control system including:
a first sensor configured for:
sensing an air temperature of the air in the temperature-controlled air system;
outputting an air temperature signal corresponding to the air temperature that is sensed;
a controller configured for:
receiving the air temperature signal;
determining, based at least in part on the air temperature signal, an air temperature adjustment;
outputting, based at least in part on the air temperature adjustment, an air temperature adjustment signal to at least one of the air-moving device and a refrigerant actuator;
a second sensor configured for:
sensing a fluid temperature of the fluid in the temperature-controlled shelf system;
outputting a fluid temperature signal corresponding to the fluid temperature that is sensed;
wherein the controller is further configured for:
receiving the fluid temperature signal;
determining, based at least in part on the fluid temperature signal, a fluid temperature adjustment;
outputting, based at least in part on the fluid temperature adjustment, a fluid temperature adjustment signal to at least one of the fluid-heating device and the refrigerant actuator.

9. A method of using a temperature-controlled foodservice unit, the method comprising the steps of:
providing that the temperature-controlled foodservice unit includes a body and a plurality of temperature-controlled systems, the body including a frame and defining a chamber, the plurality of temperature-controlled systems being operatively coupled with the frame and configured for transferring heat with respect to a food product positioned within the chamber, the plurality of temperature-controlled systems including a temperature-controlled shelf system and a temperature-controlled air system, the temperature-controlled shelf system including at least one shelf and at least one fluid passageway, the at least one shelf being positioned within the chamber, the at least one fluid passageway being associated with the at least one shelf;
carrying, by the at least one fluid passageway, a fluid in the at least one fluid passageway so as to transfer heat by thermal conduction and thermal radiation with respect to the food product positioned on the at least one shelf;
moving, by the temperature-controlled air system, air through the chamber so as to transfer heat by thermal convection with respect to the food product positioned on the at least one shelf; and
supplying, by the temperature-controlled air system, air to the chamber from opposing directions.

10. The method according to claim 9, wherein the temperature-controlled air system includes a first air supply plenum, a second air supply plenum, and an air return plenum, the first air supply plenum including a first wall with a first plurality of holes, the second air supply plenum including a second wall with a second plurality of holes, the air return plenum including a third wall with a third plurality of holes.

11. The method according to claim 10, wherein the first wall is a first side wall, the second wall is a second side wall opposing the first side wall, and the third wall is a rear wall.

12. The method according to claim 10, wherein the temperature-controlled air system includes an air-moving device configured for moving the air within the temperature-controlled air system and thereby for increasing or decreasing a velocity of the air, the air-moving device being configured for receiving the air from the third plurality of holes and for moving the air to the first plurality of holes and the second plurality of holes.

13. The method according to claim 12, wherein the temperature-controlled foodservice unit further comprises a first heat exchanger configured for conditioning the air before the air enters the chamber by way of the first plurality of holes and the second plurality of holes.

14. The method according to claim 13, wherein the temperature-controlled shelf system is configured such that the fluid carried therein flows through the first heat exchanger before the fluid enters the chamber such that the fluid and the air transfer heat therebetween by way of the first heat exchanger.

15. The method according to claim 14, wherein the temperature-controlled foodservice unit further comprises a refrigerant system configured for circulating a refrigerant therein, wherein the temperature-controlled shelf system includes a fluid-heating device configured for heating the fluid and a second heat exchanger configured for cooling the fluid by way of the refrigerant, and the temperature-controlled foodservice unit is configured for using the refrigerant to cool the fluid of the temperature-controlled shelf system and thereby also the air of the temperature-controlled air system, preferably the temperature-controlled foodservice unit further comprises a control system operatively coupled with the temperature-controlled shelf system and the temperature-controlled air system, the control system including:
a first sensor configured for:
sensing an air temperature of the air in the temperature-controlled air system;
outputting an air temperature signal corresponding to the air temperature that is sensed;
a controller configured for:
receiving the air temperature signal;
determining, based at least in part on the air temperature signal, an air temperature adjustment;
outputting, based at least in part on the air temperature adjustment, an air temperature adjustment signal to at least one of the air-moving device and a refrigerant actuator;
a second sensor configured for:
sensing a fluid temperature of the fluid in the temperature-controlled shelf system;
outputting a fluid temperature signal corresponding to the fluid temperature that is sensed;
wherein the controller is further configured for:
receiving the fluid temperature signal;
determining, based at least in part on the fluid temperature signal, a fluid temperature adjustment;
outputting, based at least in part on the fluid temperature adjustment, a fluid temperature adjustment signal to at least one of the fluid-heating device and the refrigerant actuator.
